# EUROPEAN PATENT APPLICATION

(11) **EP 4 603 054 A1**
(43) Date of publication of application: **20.08.2025**
(21) Application number: 23867677.9
(22) Date of filing: 04.09.2023
(51) Int. Cl.: A61C 8/00

(54) **DENTAL IMPLANT**

(30) Priority: 22.09.2022 ES 202231543 U
(71) Applicant: Lopez-Romero Hernandez, Vicente, 45789 Turleque (ES)
(72) Inventor: Lopez-Romero Hernandez, Vicente, 45789 Turleque (ES)
(74) Representative: Espiell Gomez, Ignacio
(86) International application number: PCT/ES2023/070532
(87) International publication number: WO 2024/062144

(57) **Abstract**

The invention consists of a novel dental implant system, the implant of which is easier, faster, safer and more stable, especially in cases in which the maxillary bone or mandible on which the dental pieces are to be implanted is highly deteriorated. The implant therefore consists of a titanium plate (1) with a U-shaped cross section to be implanted in the mandible or with an inverted U-shape to be implanted in the maxillary by way of a casing tightly surrounding the mandible/maxillary that extends over the space originally occupied by the entire arch of the dental pieces or a portion thereof depending on the number of dental pieces to be implanted. The plate contains holes (4) in both its front and rear face for the passage of titanium screws (5) for fastening to the bone tissue of the mandible or maxillary. A series of attachments (6-6') are integrated on the upper surface or central branch of the U-shaped profile on which the artificial dental pieces (7) are fastened.

## Description

### OBJECT OF THE INVENTION

The present invention relates to a dental implant, specifically designed to enable the implantation of the entire set of molars and teeth, although it is equally applicable to individual dental units or groups thereof.

The purpose of the invention is to provide a new dental implantology system that is easier and quicker to implant, as well as safer and more stable during implantation, particularly in cases where the maxillary bone or jaw in which the dental pieces are to be implanted is highly deteriorated.

### BACKGROUND OF THE INVENTION

Dental implants are artificial roots, created to replace teeth that are missing or lost for any reason, and are capable of integrating to the point of coexisting in a healthy and completely natural way with the other tissues in the mouth. They are made of chemically pure titanium and act as substitutes for dental roots.

After they have been placed within the maxilla or mandible, they serve, once osseointegrated, to provide support for the new artificial teeth that will be attached to them.

The implants are anchored to the bone by means of a biological process known as osseointegration, through which the body establishes a direct connection between the bone and the surface of the implant. Once osseointegration has occurred, the implant is firmly anchored to the bone and can support a prosthesis to meet all functional and aesthetic requirements as if it were a healthy natural tooth.

It is therefore a long and laborious process, uncomfortable for the patient. Furthermore, in cases where the maxilla or mandible are severely deteriorated, the implant may not take properly, or may become detached over time due to the fragility of the bone tissue into which it is implanted.

### EXPLANATION OF THE INVENTION

The proposed dental implant provides a fully satisfactory solution to the aforementioned problems, based on a highly effective approach that reduces operative times and ensures total stability of the implanted dental pieces, preventing them from accidentally becoming detached.

To this end, the implant of the invention radically changes the way in which the dental pieces are attached to the maxilla or mandible.

More specifically, it is envisaged that the dental implant, instead of being constituted as an independent element for each tooth, is formed as a single common element for all the teeth, with one device defined for the upper jaw and another for the lower jaw, in the event that all the teeth need to be implanted.

Nevertheless, the device of the invention may be adapted for a single dental unit if only one needs to be implanted, and it can be designed to implant two, three, or more dental units from a single device, depending on each specific case.

In accordance with one of the essential features of the invention, the proposed implant is formed from a titanium plate with a cross-section essentially in the shape of a "U" or inverted "U", depending on whether it is intended to adapt to the maxilla or the mandible, which thus constitutes an envelope around said maxilla or mandible. Based on X-rays or scans of the patient's mouth, a titanium plate will be designed that is formally and dimensionally suitable for the maxilla or mandible in question, adapting to its external contour. For this purpose, it will clearly be necessary to open the gum beforehand in order to implant said plate, enveloping the bone in the manner of a peripheral shield.

Said plate will be screwed onto the inner and outer surfaces of the maxilla/mandible by means of titanium screws, passing through holes provided in said plate.

The plate will have, on its external face, titanium appendages on which the artificial dental pieces are fixed, thereby allowing for their customisation and replacement if necessary.

In accordance with another feature of the invention, it is envisaged that a silk thread will be passed through each tooth or molar.

In this way, a completely novel implantology system is achieved, which is much more stable than existing systems to date, quicker to implant, and significantly more efficient.

### BRIEF DESCRIPTION OF THE DRAWINGS

To complement the description set out below and in order to facilitate a better understanding of the features of the invention, in accordance with a preferred practical embodiment thereof, a set of drawings is included as an integral part of said description, in which, for illustrative rather than limiting purposes, the following is shown:
Figure 1 shows a sectional view of a jaw at the level of the implantation area of the device according to the invention, in an initial phase or prior to said implantation.
Figure 2 shows a side view of the device of the invention implanted on the jawbone from the previous figure, after the gum has first been opened.

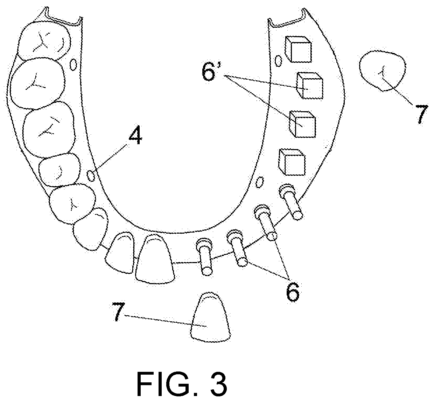

Figure 3 shows a plan view of a possible embodiment of a titanium dental implant plate, onto which several dental pieces appear to be randomly implanted.

### PREFERRED VERSION OF THE INVENTION

In view of the figures highlighted, it can be observed that the device of the invention is formed by a titanium plate (1) with an essentially "U"-shaped or inverted "U"-shaped cross-section, depending on whether it is intended to fit the maxilla or the mandible (2), which constitutes an envelope around the respective maxilla or mandible. Based on radiographs or scans of the patient's mouth, a titanium plate will be designed that is formally and dimensionally suitable to fit closely and externally to the area of the maxilla or mandible where the dental implants are to be placed after the gum (3) has been opened, and which may therefore cover the space of the entire dental arch in the case of a full implantation, or may be limited to one, two, three or more consecutive dental implants.

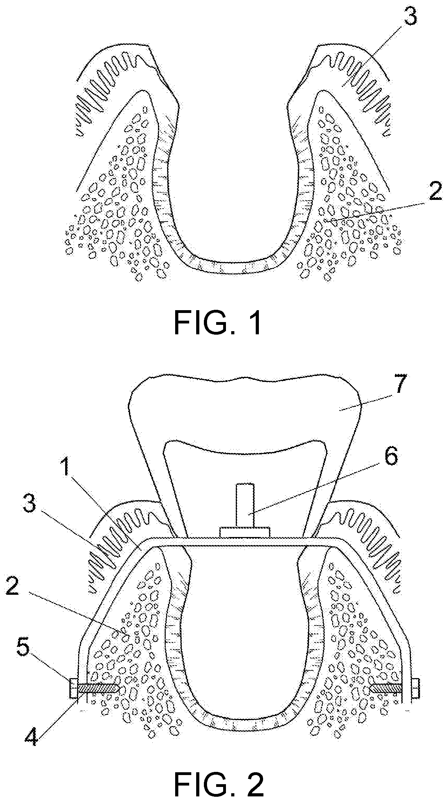

As can be seen in Figure 2, the plate will incorporate holes (4) on both its anterior and posterior surfaces, through which screws (5), also made of titanium, are inserted and which screw into the bone tissue of the mandible or maxilla.

These screws will preferably be used in a number of nine, four on the inner side and five on the outer side, duly equidistant from each other.

As previously mentioned, a series of appendages (6-6') for securing the artificial dental pieces (7) will be integrated on the upper face or middle branch of the "U"-shaped profile of the plate (1).

In this way, a highly stable implant is achieved, which is easy and quick to implant, and fully customisable.

## Claims

1. Dental implant, **characterised in that** it is composed of a titanium plate (1) with a U-shaped cross-section for implantation in the mandible, or an inverted U-shape for implantation in the maxilla, in the manner of a casing closely fitting the mandible/maxilla, which extends over the space originally occupied by the entire arch of the dental pieces or part thereof, depending on the number of dental pieces to be implanted. The plate incorporates holes (4) on both its anterior and posterior faces for the passage of titanium screws (5) for fixation to the bone tissue of the mandible or maxilla, with the particular feature that a series of appendages (6-6') are integrated onto the upper surface or middle branch of the U-profile, onto which the artificial dental pieces (7) are fixed.

2. Dental implant according to claim 1, **characterised in that** the plate includes five holes (4) for the passage of fixation screws (5) on its outer face and four holes (4) for the passage of fixation screws (5) on its inner face.
